# EUROPÄISCHE PATENTSCHRIFT

(11) **EP 0 422 137 B1**
(45) Veröffentlichungstag und Bekanntmachung des Hinweises auf die Patenterteilung: **15.12.1993**
(21) Anmeldenummer: 90901733.7
(22) Anmeldetag: 31.01.1990
(51) Int. Cl.: B01D 63/08, B01D 29/05, B01D 29/54

(54) **SPIRALFILTER**
SPIRAL FILTER
FILTRE A SPIRALE

(30) Priorität: 18.02.1989 CH 565/89
(43) Veröffentlichungstag der Anmeldung: 17.04.1991
(73) Patentinhaber: Bioengineering AG, CH-8636 Wald (CH)
(72) Erfinder: WINZELER, Heinz, Beat, CH-8405 Winterthur (CH)
(74) Vertreter: Salgo, Reinhold Caspar, Dr.
(86) Internationale Anmeldenummer: CH9000022
(87) Internationale Veröffentlichungsnummer: WO9009229

## Beschreibung

Die vorliegende Erfindung betrifft eine Filtrier-Vorrichtung, in der das zu filtrierende Gut auf einer Spiralbahn geführt wird. Zu filtrierende Güter können Aerosole, flüssige und gasige Suspensionen, kolloidale und echte Lösungen sein.

Solche Filtrier-Vorrichtungen sind an sich bekannt, so z.B. aus der JP-A-57 075 113 und aus US-A-4 340 475. Sowohl in den beiden genannten, als auch in anderen den Stand der Technik bildenden Veröffentlichungen, ist es das Ziel, die bei Filtration, insbesondere Ultrafiltration, auftretenden Hindernisse zu vermeiden, nämlich: Bildung von Filterkuchen, Verstopfen der Filterporen, Entstehen von Gel- und Salzpolarisation und, durch alle diese genannten Erscheinungen verursacht, Abfall der Filtrierleistung. Dies wird erreicht durch hohe Strömungsgeschwindigkeit des Filtriergutes quer zur Filtrationsrichtung, wodurch der Aufbau von den Filtrationsvorgang behindernden Schichten vermieden oder zumindest stark reduziert wird. Dieses an sich bekannte Verfahren wird "cross-flow"-Filtration genannt. Die verschiedenen vorgeschlagenen Verfahren und Vorrichtungen weisen verschiedene Nachteile auf: Wird eine im wesentlichen runde Filterplatte tangential angeströmt, so nimmt die Geschwindigkeit des Fluids wegen der Kontinuitätsbedingung von aussen nach innen zu, oder von innen nach aussen ab (US-A-3 702 659, CH-A-625 712). Wird das Retentat in geschlossenen Kanälen geführt, so ist die mittlere Strömungsgeschwindigkeit zwar konstant, hingegen tritt in den engen Kanälen ein hoher Strömungswiderstand auf, da das Ziel hier erklärtermassen eine turbulente Strömung ist. Dabei treten hohe Scherkräfte auf, die einerseits den Energieaufwand beträchtlich steigern, anderseits negative Auswirkungen auf das zu filtrierende Gut haben können, besonders im Bereich von Flüssigkeiten, die entweder instabile und grosse Moleküle oder pflanzliche, bzw. tierische Zellen enthalten. Der grosse Energieaufwand kann das zu filtrierende Gut derart aufheizen, dass chemische Veränderungen eintreten. Ferner sind die vorgeschlagenen Vorrichtungen in der Regel für einen besonderen Filtertyp geeignet, als dessen Hersteller auch der Hersteller der Vorrichtung auftritt; oder es sind besondere Dichtflächen und/oder komplizierte Lochungen an den Filterplatten vorgesehen.

Die meisten bekannten Vorrichtungen sind zudem in einen Behälter eingebaut. Dies macht einerseits die Montage - beim Einbau neuer Filterplatten - aufwendig, anderseits erfordern solche Behälter angesichts der hohen Drucke, die bei Ultrafiltration notwendig sind, einen besonderen Konstruktionsaufwand. Ferner wird die Sterilisation einer solchen Vorrichtung schwierig. Einer effektiven Sterilisation steht auch die Bauweise mit engen Kanälen im Wege.

In der genannten US-A-4 340 475 wird das zu filtrierende Gut in einem Ausführungsbeispiel in einer runden Trägerplatte radial geführt, in einem anderen, dem Oberbegriff von Anspruch 1 entsprechenden Ausführungsbeispiel - um die Aenderung der Strömungsgeschwindigkeit zu umgehen - auf einer rechteckigen Trägerplatte in einer breiten eckigen Spiralbahn. Vom Nachteil der sich ändernden Strömungsgeschwindigkeit wurde bereits oben gesprochen; die flachen, als spiraliges Mäander angelegten, Strömungsbahnen im genannten zweiten Ausführungsbeispiel beheben zwar diesen Nachteil, dafür ist die Strömungsgeschwindigkeit über ein so breites, im wesentlichen eckig begrenztes, Band hinweg ausgesprochen inhomogen. Diese Flüssigkeitsführung hat dann den Nachteil, dass das Filtermedium an Stellen mit kleiner oder gar verschwindender Strömung verstopft, oder sich Polarisationsschichten ausbilden. Damit wird die aktive Filterfläche rasch kleiner.

Die Aufgabe der vorliegenden Erfindung ist die Schaffung einer Filtrier-Vorrichtung, die alle genannten Nachteile überwindet und zudem einfach zu handhaben und kostengünstig herzustellen ist.

Die Lösung der hier gestellten Aufgabe ist im Patentanspruch 1 wiedergegeben.

Anhand der beigegebenen Zeichnung wird die Erfindung näher erläutert. Es zeigen
- Fig. 1: Eine Aufsicht auf eine erfindungsgemässe Spiralplatte,
- Fig 2a: einen Schnitt durch die Spiralplatte von Fig. 1,
- Fig. 2b: ein Detail von Fig. 2a,
- Fig. 3a: eine Aufsicht auf die Trägerplatte für das Filtermedium,
- Fig. 3b: einen Querschnitt durch die Trägerplatte von Fig. 3a,
- Fig. 3c: ein zweites Ausfuhrungsbeispiel einer Trägerplatte,
- Fig. 4: eine perspektivische Ansicht des Filtermediums,
- Fig. 5: einen teilweisen Querschnitt durch eine Filtriervorrichtung bestehend aus mehreren Einheiten,
- Fig. 6: ein weiteres Ausführungsbeispiel eines Details von Fig. 5
- Fig. 7a: eine prinzipielle Darstellung der Strömung durch ein gekrümmtes Rohr,
- Fig. 7b: eine Darstellung der Strömungsverhältnisse in der erfindungsgemässen Vorrichtung.

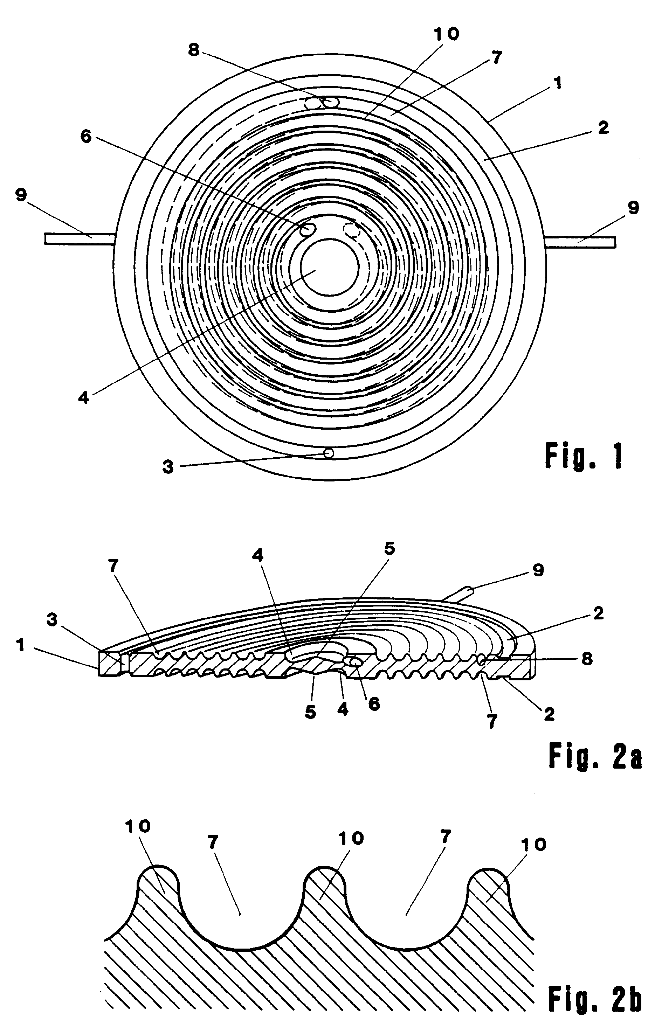

Fig. 1 und 2 zeigen ein Ausführungsbeispiel einer erfindungsgemässen Spiralplatte 1, in welcher das Retentat geführt wird. Diese weist auf beiden Seiten je einen ringförmigen Kanal 2 auf zur Ableitung des Permeats. Die beiden Kanäle 2 sind durch eine Bohrung 3 verbunden. Ebenfalls auf beiden Seiten der Spiralplatte 1 ist je eine runde Vertiefung 4 angebracht, die beispielsweise eine flaschenbodenförmige Erhöhung 5 aufweist. Diese Erhöhung 5 kann in ihrer Form auf das zu filtrierende Gut, bzw. seine Strömungsgeschwindigkeit optimiert werden. Unter der Oberfläche der Spiralplatte 1 hindurch und im wesentlichen parallel dazu führt von der Vertiefung 4 aus eine Bohrung 6 zum Anfang einer spiralförmigen Nut 7. Die Bohrung 6 mündet im wesentlichen tangential in die Nut 7, sowohl als auch in die Vertiefung 4; diese Nut (7) führt in einer oder mehreren, beispielsweise sieben, Windungen nach aussen, wo sie in eine weitere Bohrung 8 mündet. Die Bohrung 8 ist in einem flachen Winkel von beispielsweise 30° gegen die Ebene der Spiralplatte 1 geneigt und verbindet die Nut 7 auf der Vorderseite mit jener auf der Rückseite. Beginnt der Strom des zu filtrierenden Fluids beispielsweise in der Vertiefung 4 und bewegt sich im Uhrzeigersinn nach aussen, so wird er durch die Bohrung 8 ohne wesentliche Richtungsänderung auf die andere Seite der Spiralplatte 1 geleitet, und strömt hier weiter im gleichen Drehsinne nach innen. Blickt man von beiden Seiten jeweils auf die Oberfläche der Spiralplatte 1, so zeigen die Nuten 7 den gleichen Schraubungssinn, oder die gleiche Helizität. Damit werden starke Richtungsänderungen im Fluidstrom vermieden, die den Strömungswiderstand markant erhöhen und einen störenden Längsdruck innerhalb des Fluids aufbauen.

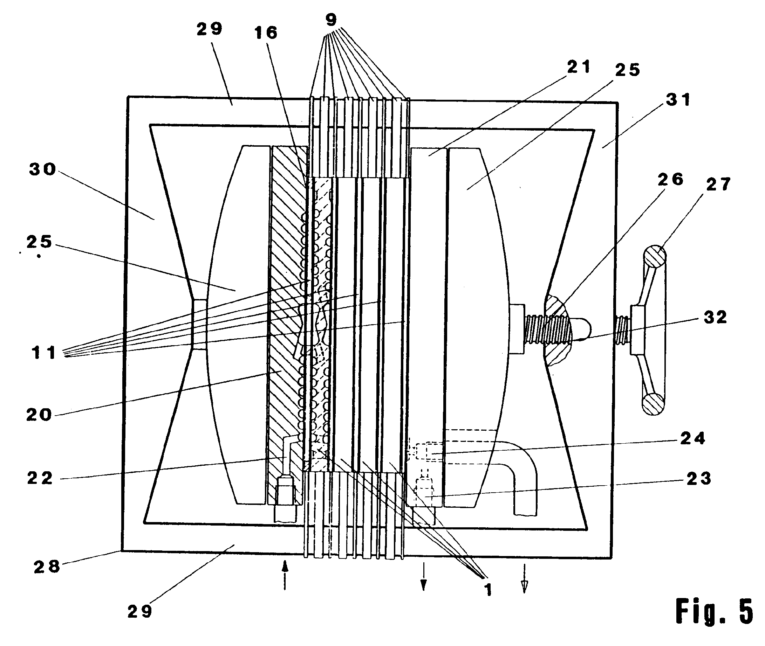

Die Spiralplatte 1 trägt zwei von ihrem Umfange ausgehenden, einander im wesentlichen gegenüberliegende und in der Ebene der Spiralplatte (1) verlaufende Stifte 9, die zur Montage dienen und deren Bedeutung aus der Beschreibung von Fig. 5 ersichtlich ist. Es ist erfindungsgemäss, dass die Stifte 9, die hier gestreckt dargestellt sind, Einfräsungen tragen, oder gebogen ausgeführt sind.

Fig. 2b zeigt einen Ausschnitt aus Fig. 2a. Die Nut 7 ist von etwa halbkreisförmigem Querschnitt. Getrennt sind die einzelnen Gänge der Nut 7 durch einen - ebenfalls spiralförmigen - Steg 10 mit gerundeter Oberkante. Der Steg 10 kann verhältnismässig schmal ausgeführt sein, da quer dazu nur die Kräfte wirken, die vom Druckabfall pro Umgang der Nut 7 herrühren und die damit im Vergleich kleinen Zentrifugalkräfte.. Durch die schmale Bauweise des Stegs 10 wird maximale Ausnützung der Filteroberfläche erzielt. Mit der Rundung des Stegs 10 vermeidet man zudem eine Verletzung des Filtermediums.

Die beiden Oberflächen der Spiralplatte 1, in die der Kanal 2, die Bohrung 3, die Vertiefung 4 und die Nut 7 eingetieft sind, ist im übrigen plan gearbeitet und von hoher Oberflächengüte. Zwischen dem äusseren Rand der Spiralplatte 1 und dem Kanal 2, zwischen diesem und dem äussersten Umgang der Nut 7, sowie zwischen ihrem innersten Umgang und der Vertiefung 4 bleiben drei ebene Kreisringe erhalten, die als Dichtflächen wirken.

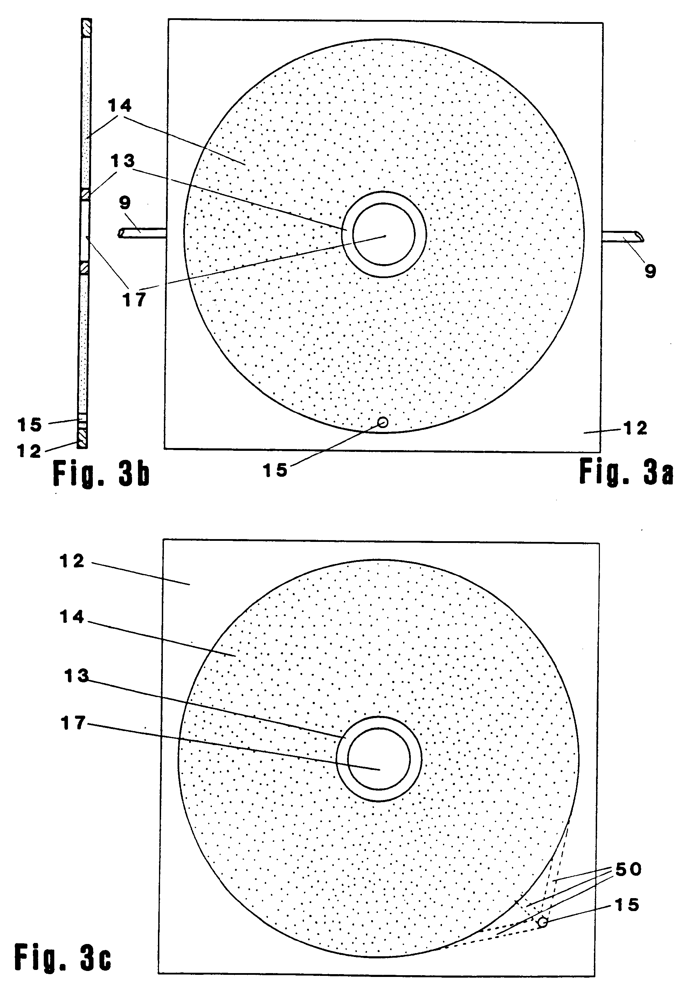

Ein Ausführungsbeispiel einer Trägerplatte 11 ist in Fig. 3a in Aufsicht, in Fig. 3b im Querschnitt gezeichnet. Sie besteht im wesentlichen aus drei Teilen: Einem im wesentlichen quadratischen Rahmen 12, einem Zentrumsring 13 mit einem Loch 17 und einer Scheibe 14 aus einem porösen Werkstoff. Als poröse Werkstoffe kommen beispielsweise in Frage: Keramik, Sintermetall, Aktivkohle, Glasfritten und weitere permeatdurchlässige Materialien oder auch Verbundwerkstoffe, die einerseits das Filtermedium angemessen stützen, anderseits unter dem Einfluss des Arbeitsdruckes keine Dickenänderung zulassen. Der für das zu filtrierende Gut undurchlässige Rahmen 12 kann, da er mechanisch weniger beansprucht wird, bei Ultrafiltration beispielsweise aus einem chemisch inerten Kunststoff wie Polysulfon bestehen, ebenso der Zentrumsring 13. Die drei Teile 12, 13, 14 sind beispielsweise ineinander eingepresst. Die Scheibe 14, deren Durchmesser grösser ist, als jener des Kanals 2 in der Spiralplatte 1, trägt eine Bohrung 15, die beim Zusammenbau der Vorrichtung fluchtend auf die Bohrung 3 der Spiralplatte 1 zu liegen kommt. Durch die Bohrung 15 wird das Permeat abgeführt.

Sowohl das Ausführungsbeispiel gemäss Fig. 3a, als auch jenes gemäss Fig. 3c tragen Stifte 9, wie die Spiralplatte 1.

In Fig. 3c ist ein zweites Ausführungsbeispiel der Trägerplatte 11 abgebildet. Hier ist die Bohrung 15 nicht in der Scheibe 14, sondern im Rahmen 12 angebracht. Im Rahmen 12 laufen beispielsweise drei Bohrungen 50, deren Achsen parallel zur Ebene des Rahmens liegen, von der Bohrung 15 zur Scheibe 14. In den Bohrungen 50 wird das Permeat gesammelt. Eine nicht gezeichnete Variante zum Ausführungsbeispiel gemäss Fig. 3c trägt zwei Bohrungen 15, wobei von beiden Bohrungen 50 ausgehen. Die zwei Bohrungen 15 liegen beispielsweise symmetrisch zum Zentrum der Scheibe 14. Das mit dem Ausführungsbeispiel gemäss Fig. 3c korrespondierende Ausführungsbeispiel der Spiralplatte 1 (nicht gezeichnet), weist keinen Kanal 2 auf, da dessen Funktion - eben das Sammeln des Permeats - von den Bohrungen 50 übernommen wird. Weist die Trägerplatte 11 zwei Bohrungen 15 auf, so sind auch in der Spiralplatte 1 zwei mit diesen fluchtende Bohrungen 3 vorzusehen.

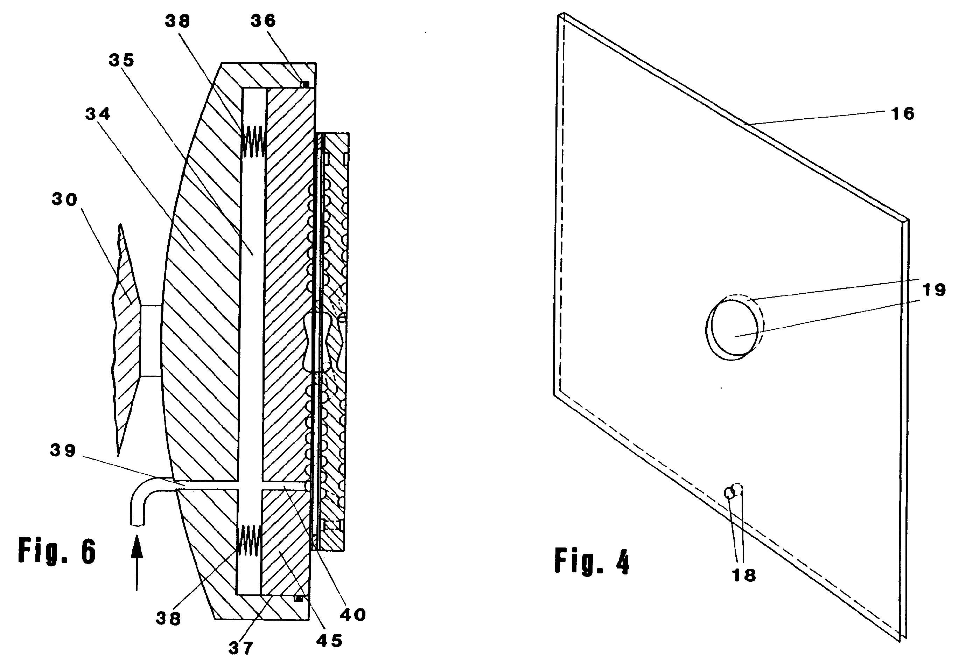

Fig. 4 zeigt eine Filterplatte 16 aus dem zu verwendenden Filtermedium, wie sie in die erfindungsgemässe Vorrichtung eingebaut wird. Es sind keinerlei Dichtflächen abzudecken. Ein rechteckiges Stück des Filtermediums von etwa doppelquadratischem Format wird, nachdem vier Löcher 18, bzw. 19 beispielsweise durch Stanzen angebracht sind, zu einem U gefaltet, dessen Schenkelabstand der Dicke der Trägerplatte 11 entspricht, und welches beim Zusammenbau einfach über die Trägerplatte 11 gehängt wird. Die Löcher 19 haben den gleichen Durchmesser wie die Vertiefungen 4 in der Spiralplatte 1, die Löcher 18 jenen der Bohrungen 3 bzw. 15. Im gefalteten Zustande kommen die Löcher auf die Vertiefungen 4, die Löcher 18 auf die Bohrungen 3 bzw. 15 zu liegen.

In Fig. 5 ist eine erfindungsgemässe Filtrier-Vorrichtung in zusammengebautem und betriebsbereitem Zustande dargestellt. Zwischen zwei Endplatten 20, 21 sind hier - im Sinne eines Beispiels vier Spiralplatten 1 mit fünf Trägerplatten 11 eingesetzt. Da jede Trägerplatte 11 eine U-förmige Filterplatte 16 trägt, sind also insgesamt zehn filtrierende Flächen vorhanden. Die beiden Endplatten 20, 21 sind auf ihren dem Filterpaket zugewandten Oberflächen ausgebildet, wie die Spiralplatten 1. Die Endplatte 20 weist eine Bohrung 22 auf, durch welche das zu filtrierende Gut eingespeist wird. Auf der der Filterplatte 16 zugewandten Seite ist die Bohrung 22 ausgeführt, wie die Bohrung 8 in der Spiralplatte 1. Die Endplatte 21 trägt zwei Bohrungen 23, 24. Die Bohrung 23 führt das Retentat - oder Konzentrat - nach aussen ab und trägt auf der der Filterplatte 16 zugewandten Seite ebenfalls die Merkmale der Bohrung 8. Die Bohrung 24 fluchtet mit den Bohrungen 3 in den Spiralplatten 1 und den Löchern 18 in den Filterplatten 16; aus der Bohrung 24 fliesst das Permeat ab.

Das Filterpaket, bestehend aus den Spiralplatten 1, den Trägerplatten 11 mit Filterplatten 16, ist zwischen die Endplatten 20, 21 eingebaut. Auf die Endplatten 20, 21 wirken zwei Druckplatten 25. Diese werden zentral von einer Druckkraft beaufschlagt, die im gezeichneten Ausführungsbeispiel durch eine Schraube 26 mit Handrad 27 erzeugt wird. Der Kraftschluss erfolgt über ein Gestell 28, bestehend aus beispielsweise zwei Zugstangen 29 und zwei Endstücken 30, 31. Das Endstück 31 trägt ein Gewinde 32 zur Aufnahme der Schraube 26. An die Stelle einer Schraube 26 mit Handrad 27 kann selbstverständlich eine hydraulische Presse treten. Die beiden Zugstangen 29 dienen gleichzeitig als Auflager für die Stifte 9 an den Spiralplatten 1 und den Trägerplatten 11, wodurch das Fluchten der Spiralplatten 1 und Trägerplatte 11, damit also der Bohrungen 3 und 15 gewährleistet ist.

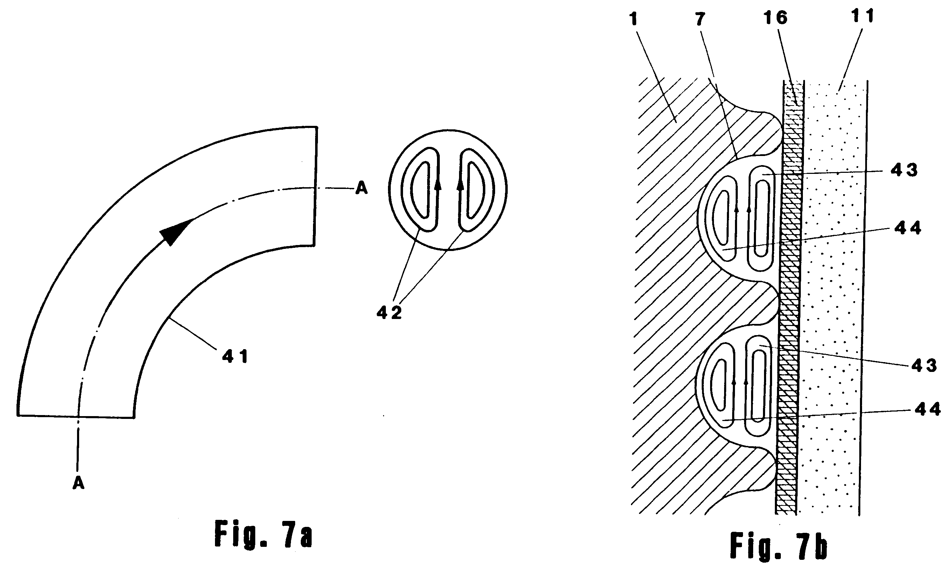

Fig. 6 zeigt einen Ausschnitt einer Variante zum Ausführungsbeispiel gemäss Fig. 5. Eine Endplatte 45 tritt hier an die Stelle der Endplatte 20 und ist grösser ausgeführt als diese; eine Druckplatte 34, die auf das Endstück 30 des Gestells 28 abgestützt ist, weist eine zylindrische Vertiefung 35 auf, die beispielsweise mit einem 0-Ring 36 gegen die zylindrische Aussenfläche der Endplatte 45 abgedichtet ist. In die Vertiefung 35 sind eine Anzahl - beispielsweise vier - Federelemente 38 eingebaut, beispielsweise Schraubenfedern. Das zu filtrierende Gut wird durch eine Bohrung 39 zunächst in die Vertiefung 35 hineingepresst, bevor es durch eine - die Bohrung 22 von Fig. 5 ersetzende - Bohrung 40 in die Endplatte 45 eintritt. Der Druck des zu filtrierenden Gutes entwickelt auf der der Vertiefung 35 zugewandten Fläche der Endplatte 45 die nötige Presskraft, um das Filterpaket zusammenzudrücken. Diese Kraft ist immer grösser, als die im Filterpaket selbst entwickelte hydrostatische Gegenkraft, und zwar im Verhältnis der Fläche der Endplatte 45 zu jener der Spiralplatte 1. Die Federelemente 38 dienen zur Herstellung einer minimalen Anfangskraft, bis die hydrostatischen Kräfte aufgebaut sind.

Die Ueberlegenheit der vorliegenden Erfindung über das, was als Stand der Technik bekannt ist, zeigt sich auch in den Fig. 7a,b. In Fig. 7a ist die Strömungsverteilung in einem gekrümmten Rohr 41 dargestellt. Der Geschwindigkeitsverteilung als Funktion des Abstandes von der Rohrachse A ist ein doppelter Rotor mit gegenläufigen Drehsinnen überlagert. Die vektorielle Addition beider Geschwindikeitsverteilungen ergibt eine doppelte Schraube. In die Fig 7b übertragen - die im wesentlichen der Fig. 2b entspricht - bedeutet dies, dass zwei ungleiche Strömungsschrauben 43, 44 entstehen, wobei die Strömungsschraube 43 an der Filterplatte 16 vorbeizieht, die Strömungsschraube 44 jedoch innerhalb der etwa halbkreisförmigen Nut 7 verbleibt. Beim Wechsel von einer Seite der Spiralplatte 1 auf die andere (durch die Bohrung 8 hindurch), wechseln die beiden Strömungsschrauben 43,44 ihre Plätze. Sowohl während der Bewegung durch die Nut 7 als auch beim Fliessen durch die Bohrung 8, insbesondere aber beim Strömen durch die Vertiefungen 4 zweier einander zugewandter Spiralplatten 1, tritt eine gewisse Durchmischung auf, so dass immer neue Schichten des Mediums mit der Filterplatte 16 in Berührung kommen. Ist die erfindungsgemässe Filtrier-Vorrichtung besonders in den Gebieten der Ultrafiltration und der Umkehrosmose - unter Einsatz hiezu geeigneter Filterplatten 16 - interessant, so ist sie doch nicht auf diese Gebiete beschränkt. Bei geeigneter Anpassung der Dimensionen aller durchströmten Teile, der optimalen Porosität der Trägerplatte 11, der Strömungsgeschwindikeit und des Arbeitsdruckes, ist die erfindungsgemässe Vorrichtung im Prinzip universell einsetzbar: Für Aerosole, gasige Suspensionen und im ganzen Gebiet der Filtration flüssiger Medien. Selbstverständlich hat eine einmal gebaute Vorrichtung ihr optimales Einsatzgebiet; andere Gebiete werden durch andere Baudimensionen und Betriebsparameter abgedeckt.

Die Rückspülung geschieht in allen Fällen durch Druckumkehr des Arbeitsdruckes bei unveränderter Strömungsrichtung und unverändertem, diese Strömung aufrechterhaltendem, Druck. Voraussetzung dafür ist die Existenz zweier Drucksysteme: Der eigentliche Arbeitsdruck, der von einer einfachen Kolbenpresse oder einem Gasdruckkissen für den Batch-Betrieb, oder einer Hochdruckdosierpumpe für kontinuierlichen Betrieb aufgebaut wird; ferner das System für die Erzeugung der Strömung längs der Spiralbahnen. Das letztere braucht nur den hydrodynamischen Druckabfall zu kompensieren.

Die erfindungsgemässe Filtrier-Vorrichtung eignet sich in hohem Masse für Parallel- und Seriebetrieb mehrerer Einheiten nach Fig. 5 oder 6, wobei hier Seriebtrieb auch bedeuten kann, dass eine grössere Anzahl von Spiralplatten 1 mit den zugehörigen Trägerplatten 11 und Filterplatten 16 zu einem einzigen Filterpaket in eine Einheit gemäss Fig. 5 oder 6 zusammengefasst sind. Für den Laborbetrieb kann auch eine einzige Spiralplatte 1 mit zwei Trägerplatten 11 und Filterplatten 16 zwischen die Endplatten 20, 21 eingeschaltet werden.

## Patentansprüche

1. Filtrier-Vorrichtung zur Filtration von Aerosolen, gasigen und flüssigen Suspensionen, kolloidalen und echten Lösungen, bestehen aus einem zwischen zwei, zur Aufnahme einer axial wirkenden Druckkraft geeigneten Druckplatten (25) eingelegten Filterpaket, welches seinerseits aufgebaut ist aus zwei Endplatten (20, 21), mindestens einer dazwischen angeordneten Spiralplatte (1), zwischen Endplatten (20, 21) und Spiralplatte (1) bzw. gegebenenfalls zwischen zwei Spiralplatten (1) angeordneten Trägerplatten (11) und den zu den Trägerplatten (11) gehörenden Filterplatten (16), wobei die mindestens eine Spiralplatte (1) das zu filtrierende Gut führt, wozu sie in jeder Oberfläche eine spiralförmige Nut (7) mit mindestens einem Umgang und, falls die Nut (7) mehr als einen Umgang aufweist, zwischen den Umgängen einen ebenfalls spiralförmigen Steg (10) trägt, und wobei die Endplatten (20, 21) hinsichtlich der Nut (7) gleich ausgeführt sind wie eine Seite der mindestens einen Spiralplatte (1),
dadurch gekennzeichnet, dass
- je eine Filterplatte (16) U-förmig gefaltet über je eine Trägerplatte (11) gelegt ist und somit deren beide Oberfläche bedeckt,
- die Spiralplatte (1) mit hoher Oberflächengüte eben gearbeitet ist, die Nut (7) einen etwa halbkreisförmigen Querschnitt aufweist und der Steg (10) gerundete Kanten aufweist,
- die beiden Nuten (7) auf einer Spiralplatte (1) gleiche Helizität aufweisen,
- in jede Oberfläche der Spiralplatte (1) in der Mitte eine runde Vertiefung (4) eingetieft ist, die mit dem inneren Ende der auf der gleichen Seite der Spiralplatte (1) liegenden Nut (7) durch eine innere Bohrung (6) verbunden ist, welche innere Bohrung (6) unter der Oberfläche der Spiralplatte (1) und im wesentlichen parallel zu ihr verläuft und im wesentlichen tangential sowohl in die Nut (7), als auch in die Vertiefung (4) mündet, dergestalt dass das aus der Nut (7) in die Vertiefung (4) strömende zu filtrierende Gut praktisch keinem Richtungswechsel unterworfen ist,
- die beiden äusseren Enden der beiden Nuten (7) einer Spiralplatte (1) durch eine in flachem Winkel gegen die Ebene der Spiralplatte (1) verlaufende äussere Bohrung (8) verbunden sind, so daß das in der einen Nut nach außen strömende Fluid in die andere Nut wechseln und in gleichem Drehsinn wieder nach innen strömen kann,
- auf jeder Oberfläche der Spiralplatte (1) ein konzentrischer Kanal (2) eingetieft ist, der zwischen dem Rand der Spiralplatte (1) und dem äussersten Umgang der Nut (7) verläuft, wobei die beiden Kanäle (2) einer Spiralplatte (1) durch die weitere äussere Bohrung (3) verbunden sind,
- die Spiralplatte (1) zwei von ihrem Umfang radial nach aussen verlaufende einander im wesentlichen gegenüberliegende Stifte (9) trägt, deren Achse parallel zur Ebene der Spiralplatte (1) verläuft,
- die beiden Endplatten (20, 21) auch hinsichtlich der Vertiefung (4) gleich ausgeführt sind, wie eine Seite der Spiralplatte (1), wobei anstelle der äusseren Bohrung (8) bei der ersten Endplatte (20) eine Einspeisebohrung (22) vorhanden ist, die zur Einspeisung des zu filtrierenden Gutes dient, aber ebenfalls in flachem Winkel in das aüssere Ende der Nut (7) mündet, und bei der zweiten Endplatte (21) eine Auslassbohrung (23) vorhanden ist, die zur Abführung des Retentates dient und im wesentlichen tangential in die Vertiefung (4) in der zweiten Endplatte (21) mündet, dass ferner die zweite Endplatte (21) eine äussere Bohrung (24) aufweist, die mit der weiteren äusseren Bohrung (3) in der Spiralplatte (1) fluchtet und zur Ableitung des Permeats dient,
- die Trägerplatte (11) aus einem im wesentlichen quadratischen Rahmen (12) aus einem für das zu filtrierende Gut undurchlässigen Material besteht, in welchen eine runde Scheibe (14) aus einem porösen Material eingepresst ist, welche in der Mitte wiederum einen Zentrumsring (13) aus dem gleichen Material wie der Rahmen (12) eingepresst trägt, wobei der Zentrumsring (13) ein zentrales Loch (17) vom Durchmesser der Vertiefung (4) in der Spiralplatte (1) aufweist, und die Trägerplatte ferner eine äussere Bohrung (15) trägt, die mit der weiteren äusseren Bohrung (3) in der Spiralplatte fluchtet,
- die Filterplatte (16) aus einem rechteckigen Stück des Filtermediums von im wesentlichen doppelquadratischen Format besteht, das zwei kleine runde Löcher (18) und zwei grosse runde Löcher (19) trägt, wobei die grossen Löcher (19) den gleichen Durchmesser haben, wie die Vertiefungen (4) in der Spiralplatte (1), die kleinen Löcher (18) jenen der weiteren äusseren Bohrungen (3) bzw. (15), dieses rechteckige Stück Filtermedium U-förmig gefaltet ist mit einem Schenkelabstand von der Dicke der Trägerplatte (11), wodurch die grossen Löcher (19) mit den Vertiefungen (4), die kleinen Löcher (18) mit den weiteren äusseren Bohrungen (3) bzw. (15) fluchten,
- die zwei Druckplatten (25) zur Aufnahme einer achsial wirkenden zentralen Druckkraft geeignet sind.

2. Filtriervorrichtung nach Patentanspruch 1, dadurch gekennzeichnet, dass der Durchmesser der beiden Kanäle (2) auf der Spiralplatte (1) kleiner ist, als der Durchmesser der runden Scheibe (14) aus porösem Material

3. Filtriervorrichtung nach Patentanspruch 1, dadurch gekennzeichnet, dass mindestens eine äussere Bohrung (15) in der Trägerplatte (11) im Rahmen (12) angebracht ist, und von ihr in der Ebene der Trägerplatte (11) liegende Bohrungen (50) ausgehen, die zur Scheibe (14) führen.

4. Filtriervorrichtung nach Patentanspruch 1 oder 3, dadurch gekennzeichnet, dass zum Einbau des zwischen den Druckplatten (25) liegenden Filterpakets ein Gestell (28) vorgesehen ist, welches aus mindestens zwei Zugstangen (29) und zwei Endstücken (30, 31) besteht, wobei das zweite Endstück (31) Mittel aufweist zur Erzeugung der nötigen Druckkraft auf das Filterpaket, und dass die Zugstangen (28) gleichzeitig die Auflager sind für die Stifte (9).

5. Filtriervorrichtung nach Patentanspruch 1, dadurch gekennzeichnet, dass die genannten Mittel zur Erzeugung der Druckkraft bestehen aus einer Schraube (26) mit Handrad (27) und einem im zweiten Endstück (31) verlaufenden Gewinde (32) zur Aufnahme der Schraube (26).

6. Filtriervorrichtung nach Patentanspruch 1, dadurch gekennzeichnet, dass die genannten Mittel zur Erzeugung der Druckkraft bestehen aus einer hydraulischen Presse.

7. Filtriervorrichtung nach Patentanspruch 1, dadurch gekennzeichnet, dass die genannten Mittel zur Erzeugung der Druckkraft bestehen aus
- einer dritten Endplatte (45) anstelle der ersten Endplatte (20) - die grösser ist, als die erste Endplatte (20) und die Spiralplatte (1) - mit einer durchgehenden Bohrung (40), die tangential in das äussere Ende der Nut (7) der ersten Endplatte (20) mündet,
- einer dritte Druckplatte (34) anstelle der zweiten der vorgenannten Druckplatten (25), die eine zylindrische Vertiefung (35) trägt mit einem Durchmesser, der im wesentlichen dem Durchmesser der dritten Endplatte (45) entspricht und mit einem 0-Ring (36) gegen den Umfang der dritten Endplatte (45) abgedichtet ist und eine Bohrung (39) aufweist, durch welche das zu filtrierende Gut zuerst in die zylindrische Vertiefung (35) und dann durch die durchgehende Bohrung (40) in der dritten Endplatte in das Filterpaket eingespeist werden kann,
- mindestens drei Federelementen (38), die in die zylindrische Vertiefung (38) eingebaut sind und eine minimale Druckkraft auf das Filterpaket erzeugen, bevor der durch das zu filtrierende Gut bewirkte hydrostatische Druck aufgebaut ist.

8. Filtriervorrichtung nach Patentanspruch 1, dadurch gekennzeichnet, dass die Scheibe (14) aus Sintermetall besteht.

9. Filtriervorrichtung nach Patentanspruch 1, dadurch gekennzeichnet, dass die Scheibe (14) aus Aktivkohle besteht.

10. Filtriervorrichtung nach Patentanspruch 1, dadurch gekennzeichnet, dass die Scheibe (14) aus Glasfritte besteht.

11. Filtriervorrichtung nach Patentanspruch 1, dadurch gekennzeichnet, dass die Scheibe (14) aus Keramik besteht.

12. Filtriervorrichtung nach Patentanspruch 1, dadurch gekennzeichnet, dass die Scheibe (14) aus einem Verbundwerkstoff besteht.

## Claims

1. A filter device for the filtration of aerosols, gaseous and liquid suspensions and colloidal and genuine solutions, comprising a filter stack between two pressure plates (25) which are suited to the take-up of an axially-directed compressive force, said filter stack for its part comprising two end plates (20, 21), at least one spiral plate (1) arranged between them, supporting plates (11) arranged between the end plates (20, 21) and the spiral plate (1) or, if required, between two spiral plates (1), and the filter plates (16) corresponding to the supporting plates (11), whereby the minimum of one spiral plate (1) feeds the material to be filtered, to which end each surface of it is provided with a spiral-shaped groove (7) with at least one convolution and, in the event of the groove (7) having more than one convolution, bearing a web (10) - also spiral in shape -between the convolutions, and whereby the end plates (20, 21) are identical to one side of the, at least one in number, spiral plate (1) with respect to the groove (7), characterised in that
- a filter plate (16) is in each instance laid, folded in a U-shape, over one supporting plate (11) and thus covering both its surfaces,
- the surface of the spiral plate (1) is fabricated to a high standard and is even, whereby the groove (7) has an approximately semicircular cross-section and the web (10) has rounded edges,
- both grooves (7) on a spiral plate (1) have the same helicity,
- a rounded recess (4) is provided on the surface in the centre of the spiral plate (1), the inner end of which is connected to the groove (7) lying on the same side of the spiral plate (1) by an inner bore (6), said inner bore (6) running beneath the surface of the spiral plate (1) and for the most part parallel to that surface and opening for the most part tangentially into both the groove (7) and the recess (4) such that the direction of flow of the material to be filtered flowing out of the groove (7) into the recess (4) is practically unchanged,
- both outer ends of the two grooves (7) in a spiral plate (1) are connected through an outer bore (8) at a flat angle against the plane of the spiral plate (1) so that the outward-flowing liquid in one groove can switch to the other groove and then flow inwards in the same turning,
- a concentric channel (2) is formed in each surface of the spiral plate (1), said channel (2) running between the edge of the spiral plate (1) and the outermost convolution of the groove (7), whereby the two channels (2) of a spiral plate (1) are connected through the further outer bore (3),
- the spiral plate (1) bears two pins (9) which extend radially outwards from its circumference and are arranged in the main opposite each other with their axes parallel to the plane of the spiral plate (1),
- the two end plates (20, 21) are also identical to one side of the spiral plate (1) with respect to the recess (4), whereby the first end plate (20) is provided with a feed bore (22) in place of the outer bore (8), said feed bore (22) serving for the feeding of the material to be filtered, but also opening at a flat angle into the outer end of the groove (7) and with an outlet bore (23) in the second end plate (21) which serves to channel off the residue and for the most part opens tangentially into the recess (4) in the second end plate (21), and further that the second end plate (21) is provided with an outer bore (24) which is aligned with the further outer bore (3) in the spiral plate (1) and serves to channel off the permeate,
- the supporting plate (11) comprises a generally square frame (12) of a material which is impermeable to the material to be filtered and in which a round disc (14) of a porous material is pressed, which in turn bears a central ring (13) pressed into its centre and of the same material as the frame (12), whereby the central ring (13) has a central hole (17) of the diameter of the recess (4) in the spiral plate (1), and the supporting plate further bears an outer bore (15) which is aligned with the further outer bore (3) in the spiral plate,
- the filter plate (16) comprises a rectangular piece of filter medium of generally double-square format which has two small round holes (18) and two large round holes (19), whereby the large holes (19) have the same diameter as the recesses (4) in the spiral plate (1) and the small holes (18) have a diameter equal to that of the further outer bores (3) and (15), said rectangular piece of filter medium folded into a U-shape and with a distance between its limbs equal to the thickness of the supporting plate (11), whereby the large holes (19) are aligned with the recesses (4) and the small holes (18) are aligned with the further outer bores (3) and (15),
- the two pressure plates (25) are suited to take-up of an axially-directed central compressive force.

2. A filter device according to Claim 1, characterised in that the diameter of both channels (2) on the spiral plate (1) is smaller than the diameter of the circular disc (14) of porous material.

3. A filter device according to Claim 1, characterised in that at least the outer bore (15) in the supporting plate (11) is arranged in a frame (12) and that bores (50) lying in the plane of the supporting plate (11) extend from the supporting plate (11) to the disc (14).

4. A filter device according to either Claim 1 or 3, characterised in that a rack (28) is provided for installation of the filter stack lying between the pressure plates (25), said rack (28) comprising at least two connecting rods (29) and two endpieces (30, 31), whereby the second endpiece (31) has a means of exerting the necessary compressive force on the filter stack and that the connecting rods (28) at the same time act as a support for the pins (9).

5. A filter device according to Claim 1, characterised in that the aforementioned means of generating the compressive force comprise a screw (26) with a handwheel (27) and a thread (32) in the second endpiece (31) to accommodate the screw (26).

6. A filter device according to Claim 1, characterised in that the aforementioned means of generating the compressive force is a hydraulic press.

7. A filter device according to Claim 1, characterised in that the aforementioned means of generating the compressive force comprises
- a third end plate (45) in place of the first end plate (20) - which is larger than the first end plate (20) and the spiral plate (1) - with a through bore (40) which opens tangentially into the outer end of the groove (7) of the first end plate (20),
- a third pressure plate (34) in place of the second of the aforementioned pressure plates (25) which bears a cylindrical cavity (35) with a diameter which in the main corresponds to the diameter of the third end plate (45) and is sealed with an O-ring (36) against the circumference of the third end plate (45) and has a bore (39) through which the material to be filtered is first introduced into the cylindrical cavity (35) and then into the through bore (40) in the third end plate in the filter stack,
- at least three spring elements (38) which are incorporated within the cylindrical cavity (35) and generate a minimal compressive force on the filter stack before the hydrostatic pressure generated by the material to be filtered has built up.

8. A filter device according to Claim 1, characterised in that the disc (14) is of sintered metal.

9. A filter device according to Claim 1, characterised in that the disc (14) is of activated charcoal.

10. A filter device according to Claim 1, characterised in that the disc (14) is of glass frits.

11. A filter device according to Claim 1, characterised in that the disc (14) is of ceramic material.

12. A filter device according to Claim 1, characterised in that the disc (14) is of a composite material.

## Revendications

1. Dispositif filtrant pour filtrer des aérosols, des suspensions gazeuses et liquides, des solutions colloïdales et vraies, formé d'une rangée de filtres qui est placée entre deux plaques de pression (25) propres à recevoir une force de compression agissant axialement, et qui est elle-même composée de deux plaques d'extrémité (20, 21), d'au moins une plaque à spirale (1) disposée entre celles-ci, de plaques de support (11) disposées entre les plaques d'extrémité (20, 21) et la plaque à spirale (1) ou éventuellement entre deux plaques à spirale (1), et des plaques filtrantes (16) appartenant aux plaques de support (11), étant précisé que la ou les plaques à spirale (1) guident le produit à filtrer et présentent à cet effet, dans chaque surface, une rainure en spirale (7) comportant au moins une spire, et portent, au cas où la rainure (7) présente plus d'une spire, une nervure (10) également en spirale, entre les spires, et étant précisé que les plaques d'extrémité (20, 21) sont réalisées comme une face de la ou des plaques à spirale (1), en ce qui concerne la rainure (7), caractérisé en ce que
- une plaque filtrante (16) est posée, pliée en forme de U, sur une plaque de support (11) et couvre ainsi les deux surfaces de celle-ci,
- la plaque à spirale (1), plane, présente une haute qualité de surface, la rainure (7) présente une section transversale sensiblement semi-circulaire et la nervure (10) des bords arrondis,
- les deux rainures (7) réalisées sur une plaque à spirale (1) présentent la même hélice,
- il est prévu, dans chaque surface de la plaque à spirale (1), au milieu, un creux rond (4) qui est relié à l'extrémité intérieure de la rainure (7) située sur la même face de la plaque à spirale (1) par un perçage intérieur (6), lequel perçage intérieur (6) s'étend sous la surface de la plaque à spirale (1), sensiblement parallèlement à celle-ci, et débouche, sensiblement tangentiellement, dans la rainure (7) ainsi que dans le creux (4), de telle sorte que le produit à filtrer s'écoulant de la rainure (7) dans le creux (4) n'est pratiquement soumis à aucun changement de direction,
- les deux extrémités extérieures de deux rainures (7) d'une plaque à spirale (1) sont reliées par un perçage extérieur (8) s'étendant suivant un angle plat par rapport au plan de la plaque à spirale (1), de sorte que le fluide s'écoulant vers l'extérieur dans une rainure peut passer dans l'autre rainure et revenir vers l'intérieur suivant le même sens de rotation,
- sur chaque surface de la plaque à spirale (1) est creusé un canal concentrique (2) qui s'étend entre le bord de la plaque à spirale (1) et la spire extérieure de la rainure (7), les deux canaux (2) d'une plaque à spirale (1) étant reliés par le second perçage extérieur (3),
- la plaque à spirale (1) porte deux tiges (9) s'étendant, à partir de sa circonférence, radialement vers l'extérieur et sensiblement opposées, dont l'axe est parallèle au plan de la plaque à spirale (1),
- les deux plaques d'extrémité (20, 21) sont réalisées comme une face de la plaque à spirale (1) également en ce qui concerne le creux (4), étant précisé que pour la première plaque d'extrémité (20), il est prévu, au lieu du perçage extérieur (8), un perçage d'amenée (22) qui sert à l'amenée du produit à filtrer, mais débouche également suivant un angle plat dans l'extrémité extérieure de la rainure (7), tandis que pour la seconde plaque d'extrémité, il est prévu un perçage d'évacuation (23) qui sert à l'évacuation du rétentat et débouche sensiblement tangentiellement dans le creux (4) prévu dans la seconde plaque d'extrémité (21), et en ce que la seconde plaque d'extrémité (21) présente par ailleurs un perçage extérieur (24) qui se trouve dans l'alignement du second perçage extérieur (3) prévu dans la plaque à spirale (1) et sert à l'évacuation du perméat,
- la plaque de support (11) se compose d'un cadre (12) sensiblement carré qui est réalisé en un matériau imperméable pour le produit à filtrer et dans lequel est inséré par pression un disque rond (14) en matériau poreux portant lui-même en son milieu, inséré par pression, un anneau central (13) réalisé dans le même matériau que le cadre (12), étant précisé que cet anneau central (13) présente un trou central (17) du même diamètre que le creux (4) prévu dans la plaque à spirale (1), et que la plaque de support comporte également un perçage extérieur (15) qui se trouve dans l'alignement du second perçage extérieur (3) prévu dans la plaque à spirale,
- la plaque filtrante (16) se compose d'un élément rectangulaire du moyen filtrant qui présente sensiblement le format d'un double carré et comporte deux petits trous ronds (18) et deux grands trous ronds (19), étant précisé que les grands trous (19) ont le même diamètre que les creux (4) prévus dans la plaque à spirale (1), tandis que les petits trous (18) ont le même diamètre que les seconds perçages extérieurs (3) et (15), et cet élément rectangulaire du moyen filtrant est plié en un U dont l'écartement correspond à l'épaisseur de la plaque de support (11), les grands trous (19) se trouvant ainsi dans l'alignement des creux (4) et les petits trous (18) dans celui des seconds perçages extérieurs (3) et (15), et
- les deux plaques de pression (25) sont propres à recevoir une force de compression centrale agissant axialement.

2. Dispositif filtrant selon la revendication 1, caractérisé en ce que le diamètre des deux canaux (2) prévus sur la plaque à spirale (1) est inférieur au diamètre du disque rond (14) en matériau poreux.

3. Dispositif filtrant selon la revendication 1, caractérisé en ce qu'un ou plusieurs perçages extérieurs (15) sont prévus dans la plaque de support (11), dans le cadre (12), desquels partent des perçages (50) situés dans le plan de la plaque de support (11) et menant au disque (14).

4. Dispositif filtrant selon la revendication 1 ou 3, caractérisé en ce qu'il est prévu, pour le montage de la rangée de filtres située entre les plaques de pression (25), un châssis (28) qui se compose d'au moins deux barres de traction (29) et de deux éléments d'extrémité (30, 31), étant précisé que le second élément d'extrémité (31) comporte des moyens pour générer la force de compression nécessaire sur la rangée de filtres, et en ce que les barres de traction (28) constituent en même temps les appuis pour les tiges (9).

5. Dispositif filtrant selon la revendication 1, caractérisé en ce que les moyens mentionnés pour générer la force de compression se composent d'une vis (26) pourvue d'un volant (27), et d'un filetage (32) s'étendant dans le second élément d'extrémité (31) pour recevoir la vis (26).

6. Dispositif filtrant selon la revendication 1, caractérisé en ce que les moyens mentionnés pour générer la force de compression se composent d'une presse hydraulique.

7. Dispositif filtrant selon la revendication 1, caractérisé en ce que les moyens mentionnés pour générer la force de compression se composent
- d'une troisième plaque d'extrémité (45) au lieu de la première plaque d'extrémité (20), qui est plus grande que celle-ci et que la plaque à spirale (1), et qui comporte un perçage traversant (40) débouchant tangentiellement dans l'extrémité extérieure de la rainure (7) de la première plaque d'extrémité (20),
- d'une troisième plaque de pression (34) au lieu de la seconde des plaques de pression (25) citées précédemment, comportant un creux cylindrique (35) qui présente un diamètre correspondant sensiblement à celui de la troisième plaque d'extrémité (45), et est rendu étanche par rapport à la circonférence de celle-ci grâce à un anneau torique (36), et comportant un perçage (39) par lequel le produit à filtrer peut être amené tout d'abord dans le creux cylindrique (35) puis, par le perçage traversant (40) prévu dans la troisième plaque d'extrémité, dans la rangée de filtres, et
- d'au moins trois éléments faisant ressort (38) qui sont montés dans le creux cylindrique (38) et génèrent une force de compression minimale sur la rangée de filtres avant que la pression hydrostatique provoquée par le produit à filtrer ne se constitue.

8. Dispositif filtrant selon la revendication 1, caractérisé en ce que le disque (14) se compose de métal fritté.

9. Dispositif filtrant selon la revendication 1, caractérisé en ce que le disque (14) se compose de charbon actif.

10. Dispositif filtrant selon la revendication 1, caractérisé en ce que le disque (14) se compose de fritte.

11. Dispositif filtrant selon la revendication 1, caractérisé en ce que le disque (14) se compose de céramique.

12. Dispositif filtrant selon la revendication 1, caractérisé en ce que le disque (14) se compose d'un matériau composite.
